# EUROPÄISCHE PATENTSCHRIFT

(11) **EP 0 525 214 B1**
(45) Veröffentlichungstag und Bekanntmachung des Hinweises auf die Patenterteilung: **26.04.1995**
(21) Anmeldenummer: 91110763.9
(22) Anmeldetag: 28.06.1991
(51) Int. Cl.: G05B 19/04, G06F 9/38

(54) **Verfahren zum Betreiben eines Automatisierungsgeräts**
Method of operating an automation apparatus
Méthode pour opérer un appareil d'automatisation

(43) Veröffentlichungstag der Anmeldung: 03.02.1993
(73) Patentinhaber: SIEMENS AKTIENGESELLSCHAFT, 80333 München (DE)
(72) Erfinder: Lang, Georg, W-8458 Sulzbach-Rosenberg (DE); Fraas, Werner, W-8450 Amberg (DE); Trummer, Georg, W-8450 Amberg (DE); Misler, Andrea, W-8450 Amberg (DE); Sigwart, Edgar, W-8450 Amberg (DE); Reinert, Gerhard, W-8460 Schwandorf (DE)

(56) Entgegenhaltungen:
- EP-A- 0 082 722
- EP-A- 0 298 396
- GB-A- 2 033 624
- US-A- 4 658 356

## Beschreibung

Die Erfindung betrifft ein Verfahren zum Betreiben eines Automatisierungsgeräts zur Führung eines technischen Prozesses, insbesondere eines modular aufgebauten Automatisierungsgeräts, mit an das Automatisierungsgerät angeschlossener Prozeßperipherie, mit folgenden, zyklisch abgearbeiteten Schritten:
a) von der Prozeßperipherie gelieferte Eingangssignale werden in das Automatisierungsgerät eingelesen;
b) die Eingangssignale werden verarbeitet, wobei u.a. aus den Eingangssignalen Ausgangssignale für die Prozeßperipherie ermittelt werden und
c) die Ausgangssignale werden an die Prozeßperipherie ausgegeben,

wobei das Ausgeben der Ausgangssignale eines Zyklus zeitverschieden vom Einlesen der Eingangssignale jedes anderen Zyklus erfolgt.

Bisher wurden die obengenannten Schritte nacheinander ausgeführt. Die Zeit für einen Durchlauf ist die sogenannte Zykluszeit. Insbesondere, wenn größere Datenmengen ein- und auszugeben sind, wird die Zykluszeit und damit die Reaktionszeit des Systems nicht nur durch die Verarbeitungsgeschwindigkeit, sondern auch durch die Dauer des Datentransfers bestimmt.

Aufgabe der vorliegenden Erfindung ist es, die Reaktionsgeschwindigkeit des Automatisierungsgeräts zu erhöhen und den Datentransfer so weit wie möglich zu minimieren.

Die Aufgabe wird dadurch gelöst, daß das Verarbeiten der Eingangssignale eines Zyklus zumindest teilweise während des Ausgebens der Ausgangssignale des vorhergehenden Zyklus und/oder des Einlesens der Eingangssignale des nachfolgenden Zyklus erfolgt.

Aus der EP 0 298 396 A2 ist zwar eine Steuereinrichtung bekannt, bei der eine Zentraleinheit über einen Bus und ein dual ported RAM mit einer weiteren Zentraleinheit verbunden ist, an die wiederum intelligente Eingabeeinheiten angeschlossen sind. Über die Größe des dual ported RAMs ist aber nichts ausgesagt. Insbesondere geht aus der genannten Schrift nicht hervor, ob in dem dual ported RAM die gesamten Eingangs- bzw. Ausgangssignale abspeicherbar sind. Der Datenaustausch zwischen den Zentraleinheiten erfolgt dadurch, daß die sendende Zentraleinheit die Daten im dual ported RAM hinterlegt und die andere Zentraleinheit über einen Interrupt hierüber informiert. Die andere Zentraleinheit quittiert daraufhin den Interrupt und liest die abgelegten Daten aus dem dual ported RAM aus.

Zur weiteren Verbesserung der Erfindung werden mit Vorteil vor dem Verarbeiten der Eingangssignale eines Zyklus die Ausgangssignale des vorhergehenden Zyklus von einem Arbeitsspeicher in einen Zwischenspeicher und die Eingangssignale des Zyklus vom Zwischenspeicher in den Arbeitsspeicher kopiert, so daß durch das Verarbeiten die Eingangssignale des nachfolgenden Zyklus und die Ausgangssignale des vorhergehenden Zyklus nicht verändert werden.

Ein besonders effizienter Betrieb ergibt sich, wenn
- nach dem Kopieren der Ausgangssignale eines Zyklus in den Zwischenspeicher und dem Einlesen der Eingangssignale des nächsten Zyklus in den Zwischenspeicher die Ausgangssignale an die Prozeßperipherie ausgegeben sowie die Eingangssignale in den Arbeitsspeicher kopiert werden,
- nach dem Kopieren der Eingangssignale diese verarbeitet werden,
- nach dem Verarbeiten der Eingangssignale und dem Ausgeben der Ausgangssignale des vorhergehenden Zyklus die Ausgangssignale in den Zwischenspeicher kopiert werden und
- nach dem Ausgeben der Ausgangssignale und dem Kopieren der Eingangssignale die Eingangssignale des nächsten Zyklus in den Zwischenspeicher eingelesen werden,
- wobei mit Vorteil jeder Verfahrensschritt sofort bei Erreichen seiner Zulässigkeitsbedingungen begonnen wird.

Die Zykluszeit kann noch weiter verkürzt werden, wenn das Ausgeben der Ausgangssignale an die Prozeßperipherie zumindest teilweise während des Kopierens der Eingabesignale in den Arbeitsspeicher erfolgt und/oder das Einlesen der Eingabesignale von der Prozeßperipherie zumindest teilweise während des Kopierens der Ausgangssignale in den Zwischenspeicher erfolgt.

Eine weitere Möglichkeit, Ein-/Ausgabe und Verarbeitung gleichzeitig durchzuführen, besteht darin,
- daß während des Verarbeitens der Eingangssignale eines Zyklus diese Eingangssignale aus einem Arbeitsspeicher gelesen und die beim Verarbeiten ermittelten Ausgangssignale im Arbeitsspeicher abgelegt werden,
- daß die Ausgangssignale des vorhergehenden Zyklus beim Ausgeben aus einem Zwischenspeicher ausgelesen werden und die Eingangssignale des nachfolgenden Zyklus beim Einlesen in den Zwischenspeicher eingelesen werden und
- daß nach dem Beenden dieser drei Schritte der Arbeitsspeicher und der Zwischenspeicher ihre Funktion tauschen, so daß nach dem Funktionstausch der bisherige Arbeitsspeicher als Zwischenspeicher und der bisherige Zwischenspeicher als Arbeitsspeicher wirken.

Wenn beim Ausgeben der Ausgangssignale nur die Signale ausgegeben werden, deren Wert sich gegenüber dem Wert bei der vorhergehenden Ausgabe geändert hat, kann der Umfang der zu übertragenden Daten erheblich reduziert werden und so die Zykluszeit noch kürzer sein. Zum Leitungstest sollten jedoch nach jeweils einer vorwählbaren Anzahl von Zyklen alle Ausgangssignale ausgegeben werden. Dasselbe gilt in analoger Weise für die Eingangssignale.

Ein Automatisierungsgerät zum Führen eines technischen Prozesses nach einem erfindungsgemäßen Verfahren besteht aus folgenden Teilen:
- zumindest einer Eingabe- und einer Ausgabeeinheit, vorzugsweise einer kombinierten Ein-/Ausgabeeinheit, zum zyklischen Einlesen von Eingangssignalen von einer Prozeßperipherie und zum zyklischen Ausgeben von Ausgangssignalen an die Prozeßperipherie,
- einem mit den Eingabe- und Ausgabeeinheiten verbundenen Ein-/Ausgabe-Controller zum zyklischen Einlesen der Eingangssignale und zum zyklischen Ausgeben der Ausgangssignale,
- einem zumindest mit dem Ein-/Ausgabe-Controller verbundenen Zwischenspeicher, in dem die gesamten von der Prozeßperipherie eingelesenen Eingangssignale zwischenspeicherbar und die gesamten an die Prozeßperipherie auszugebenden Ausgangssignale abspeicherbar sind,
- einem zumindest mit dem Ein-/Ausgabe-Controller verbundenen Prozessor zum Verarbeiten der von der Prozeßperipherie gelieferten Eingangssignale und
- einem zumindest mit dem Prozessor verbundenen Arbeitsspeicher zum Speichern der gesamten von der Prozeßperipherie eingelesenen Eingangssignale und zum Zwischenspeichern der gesamten an die Prozeßperipherie auszugebenden Ausgangssignale.

Zur sinnvollen Minimierung des Datentransfers ist es von Vorteil, wenn der Zwischenspeicher einen Speicherbereich zum Abspeichern von Änderungsanzeigen aufweist und das Automatisierungsgerät einen Zähler zum Zählen der Zyklen aufweist.

Der Aufwand zum Kopieren der Ausgangssignale in einen Zwischenspeicher und der Eingangssignale in einen Arbeitsspeicher kann minimiert werden, wenn der Arbeitsspeicher und der Zwischenspeicher gleich ausgebildet sind und der Zwischenspeicher gleich ausgebildet sind und sowohl der Prozessor als auch der Controller sowohl auf den Arbeitsspeicher als auch auf den Zwischenspeicher zugreifen können.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Es zeigen:
- FIG 1: ein Blockschaltbild eines Automatisierungsgeräts,
- FIG 2: ein Ablaufdiagramm eines Einzelzyklus,
- FIG 3 bis 6: typische Programmbearbeitungsschemata,
- FIG 7: das Prinzip der Datenverwaltung im Ein- und Zwischenspeicher,
- FIG 8: ein weiteres Blockschaltbild eines Automatisierungsgeräts und
- FIG 9: den Aufbau einer intelligenten Ein-/Ausgabebaugruppe.

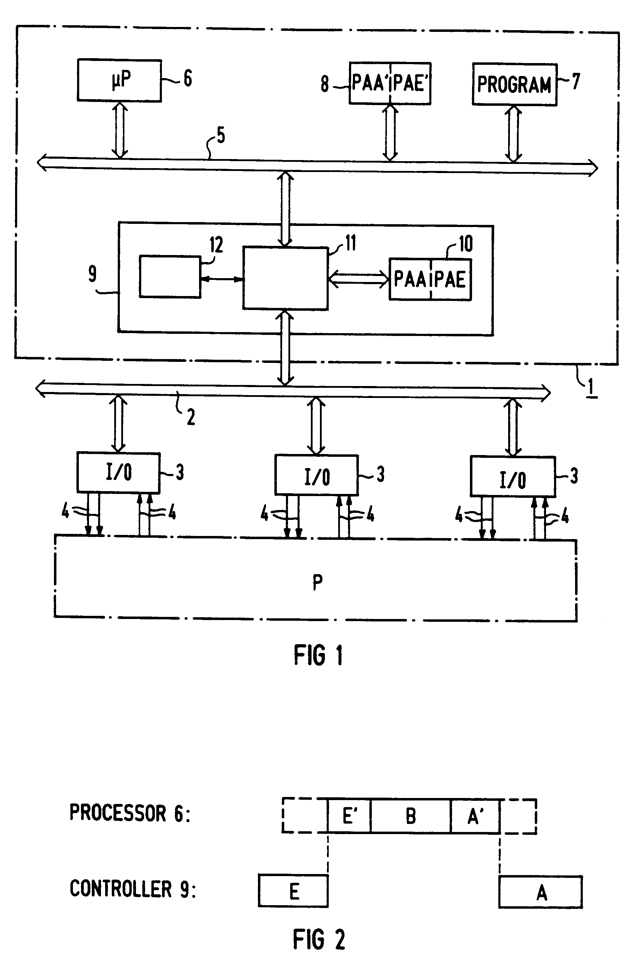

Gemäß FIG 1 ist die Zentraleinheit 1 eines modular aufgebauten Automatisierungsgeräts über den Bus 2 mit Baugruppen 3 verbunden. Die Baugruppen 3 können Eingabebaugruppen, Ausgabebaugruppen, oder kombinierte Ein-/Ausgabebaugruppen, sowohl zur digitalen als auch zur analogen Datenein-/ausgabe sein. Die Baugruppen 3 sind über Verbindungsleitungen 4 mit nicht dargestellten Prozeßführungselementen, z.B. Stellgliedern oder Sensoren, verbunden. Über die Prozeßführungselemente wird der Prozeß P gesteuert und überwacht.

Wie aus FIG 1 weiterhin ersichtlich ist, weist die Zentraleinheit 1 einen internen Bus 5 auf, an den folgende Komponenten angeschlossen sind:
- Der Mikroprozessor 6, der das im Programmspeicher 7 abgespeicherte Programm abarbeitet,
- der eben erwähnte Programmspeicher 7,
- der Arbeitsspeicher 8,
- der Ein-/Ausgabe-Controller 9.

Der Controller 9 weist intern einen Zwischenspeicher 10, ein Bauteil 11 mit einer gewissen eigenen Intelligenz sowie einen Zähler 12 zum Zählen der Zyklen auf. Das Bauteil 11 kann beispielsweise ein vollständiger Prozessor, kann aber auch ein ASIC sein. Sowohl der Arbeitsspeicher 8 als auch der Zwischenspeicher 10 können aus mehreren Teilspeichern bestehen, z.B. nur für die Eingangssignale und die Ausgangssignale.

Der interne Bus 5 ist prinzipiell völlig unabhängig vom externen Bus 2. Dadurch ist es leicht möglich, neu entwickelte Zentraleinheiten 1 mit einem internen Bus 5 von z.B. 32 Bit Datenbreite zu verwenden, ohne ein komplett neues Rückwandbussystem zu entwickeln, wenn der externe Bus 2 z.B. eine Datenbreite von 8 Bit hat.

Um den in FIG 1 durch das Symbol P angedeuteten technischen Prozeß zu steuern und zu überwachen, werden zyklisch von der nicht dargestellten Prozeßperipherie, also Sensoren jeder Art, gelieferte Eingangsignale in das Automatisierungsgerät eingelesen, die Eingangssignale verarbeitet und Ausgangssignale für die Prozeßperipherie, also die Stellglieder aller Art, ermittelt, sowie gegebenenfalls Zustands- und Alarmmeldungen an den Benutzer ausgegeben und die Ausgangssignale an die Prozeßperipherie ausgegeben. Hierzu werden folgende Schritte durchgeführt:
- Die an den Baugruppen 3 anstehenden Eingangsignale werden in die Baugruppen 3 übernommen und dort zwischengespeichert.
- Die Eingangssignale werden vom Controller 9 als Prozeßabbild PAE der Eingänge in den Speicher 10 eingelesen; dieser Schritt ist in den Figuren 2 bis 6 mit dem Symbol E bezeichnet.
- Das Prozeßabbild PAE wird vom Prozessor 6 aus dem Zwischenspeicher 10 abgerufen und im Arbeitsspeicher 8 als Prozeßabbild PAE′ der Eingänge abgelegt; dieser Schritt wird in den Figuren 2 bis 6 mit E′ bezeichnet.
- Vom Prozessor 6 wird aus den Eingangssignalen sowie gegebenenfalls weiteren Größen unter Abarbeitung des im Speicher 7 gespeicherten Programms das Prozeßabbild PAA′ der Ausgänge berechnet und im Arbeitsspeicher 8 abgelegt; dieser Schritt wird nachstehend B genannt.
- Der Prozessor 6 kopiert das Prozeßabbild PAA′ der Ausgänge vom Arbeitsspeicher 8 in den Zwischenspeicher 10; dieser Schritt ist nachstehend als A′ bezeichnet.
- Das Bauteil 11 gibt das Prozeßabbild PAA über den Bus 2 an die Baugruppen 3 aus; dieser Schritt wird als A bezeichnet.
- Die Baugruppen 3 geben die Ausgangssignale an die Stellglieder aus und steuern dadurch den Prozeß P in der gewünschten Weise.

Von obigen sieben Schritten werden der erste und der letzte ausgeführt auf allgemein bekannte Art und Weise ausgeführt. Auf diese Schritte wird daher im folgenden nicht mehr eingegangen.

FIG 2 zeigt nun den zeitlichen Ablauf der Schritte E, E′, B, A′ und A eines Zyklus. Die Kernidee der vorliegenden Erfindung besteht nun darin, die Totzeiten des Prozessors 6 bzw. des Controllers 9 dadurch zu nutzen, daß vom Controller 9 bereits vorab, d.h. vor der Ausführung des Schrittes A, der Schritt E für den nächsten Zyklus ausgeführt wird. Dadurch kann der Prozessor 6 sofort nach Beenden des Schrittes A′ mit dem Schritt E′ des nächsten Zyklus fortfahren, was durch das rechte gestrichelte Kästchen angedeutet sein soll. Ebenso kann der Controller 9 während seiner Totzeit zwischen den Schritten E und A den Schritt A des vorhergehenden Zyklus ausführen, so daß auch der Schritt A′ des vorhergehenden Zyklus direkt an den Schritt E′ anstoßen kann, was durch das linke gestrichelte Kästchen angedeutet sein soll.

Der Vorteil dieser Vorgehensweise liegt darin, daß die Schritte E′ und A′ erheblich weniger Zeit in Anspruch nehmen als die Schritte E und A, weil der Datentransfer über den internen Bus 5 erheblich schneller abläuft als über den Bus 2. Dadurch ergibt sich als Zykluszeit der größere der beiden folgenden Werte:
- Die Summe der Ausführungszeiten für die Schritte E′, B, A′
- die Summe der Ausführungszeiten für die Schritte E, A.

Bei konventioneller Ausführung wäre die Zykluszeit die Summe der Ausführungszeiten für die Schritte E, B und A.

Bei der Realisierung der Erfindung ist zu beachten, daß die Schritte E, E′ sowie A, A′ sich zeitlich nicht überlappen dürfen, da ansonsten Dateninkonsistenzen entstehen können.

Die Schritte E und A′ sowie A und E′ können sich dagegen zeitlich überlappen, was im folgenden zur weiteren Verkürzung der Zykluszeit auch ausgenutzt wird.

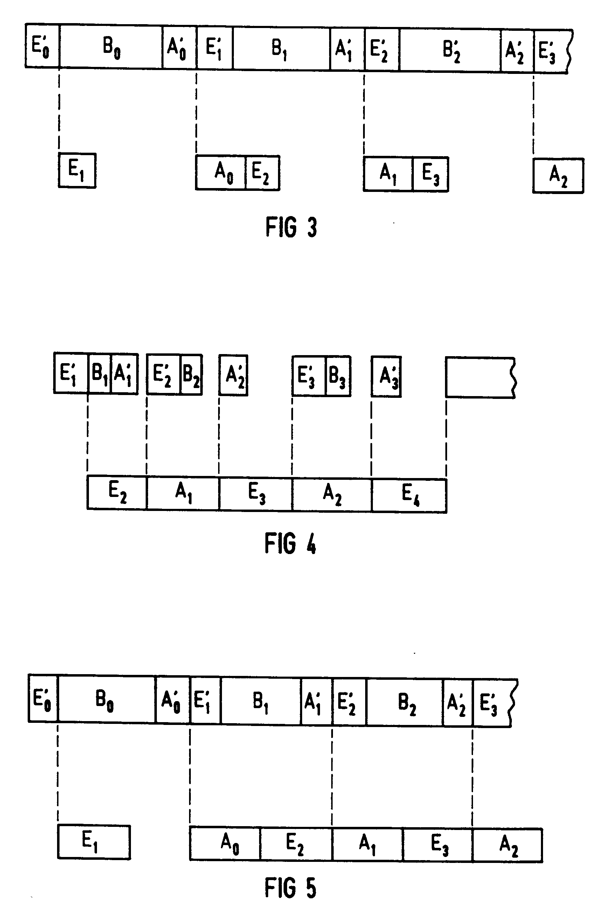

Die Figuren 3 bis 5 zeigen nun verschiedene mögliche Fälle, die je nach Länge des abzuarbeitenden Programmes und Umfang des Datentransfers möglich sind. Gleiche Indizes beziehen sich dabei auf denselben Zyklus.

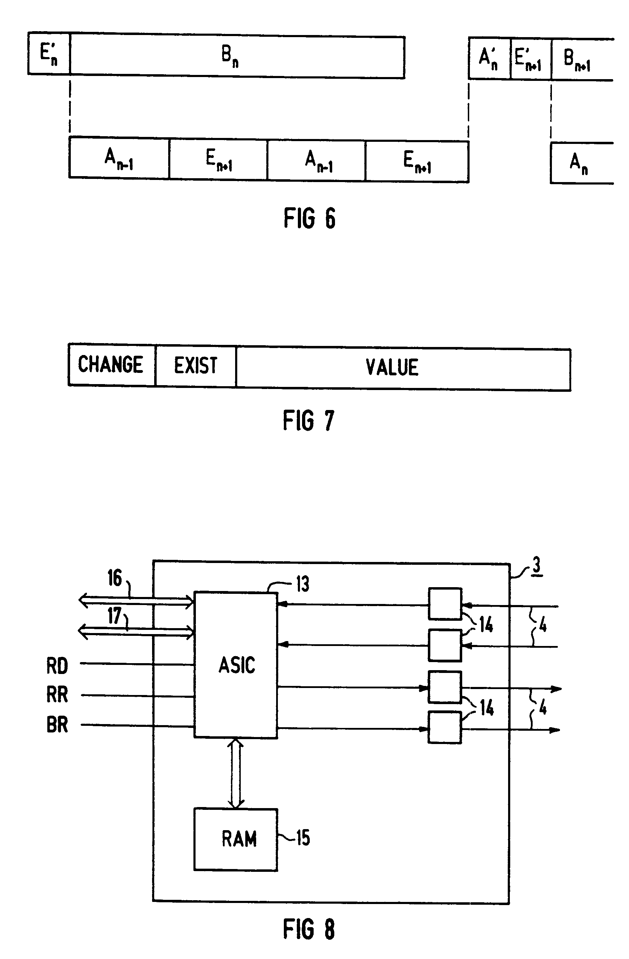

Bei dem Verfahren gemäß den Figuren 3 bis 5 wurden die Schritte E und A pro Zyklus nur einmal ausgeführt, wobei jeder der fünf Verfahrensschritte sofort nach Erreichen seiner Zulässigkeitsbedingungen begonnen wird. Demgegenüber werden bei dem Verfahren gemäß der FIG 6 die Schritte A und E solange ausgeführt, bis der Verfahrensschritt B beendet ist. Sodann wartet der Prozessor 6, bis der derzeit laufende bzw., falls gerade der Schritt A ausgeführt wird, der nächste Schritt E beendet ist, und führt dann erst die Schritte A′ und E′ aus. Sowie der Prozessor 6 mit dem nächsten Schritt B fortfährt, beginnt der Controller 9 wieder mit den Schritten A und E. Der Vorteil dieser Verfahrensweise besteht darin, daß dem Prozessor 6 stets "frische" Eingangssignale zur Verfügung stehen, während bei der vorstehend beschriebenen Verfahrensweise, vergl. insbesondere FIG 3, der letzte Einlesevorgang bereits gewisse Zeit zurückliegen kann. Der Nachteil des Verfahrens gemäß FIG 6 besteht darin, daß es nicht ganz so zeitoptimal abläuft wie das erstere Verfahren.

Gemäß FIG 6 wird mit dem Schritt Aₙ zugleich mit dem Schritt Bₙ₊₁ begonnen. Frühestens könnte der Schritt Aₙ nach Beenden des Schrittes A′ₙ beginnen, die in FIG 6 dargestellte Vorgehensweise ist jedoch einfacher zu realisieren. Weiterhin kann das Verfahren dadurch noch weiter optimiert werden, daß nur der Einlesevorgang Eₙ immer wieder ausgeführt wird, während der Ausgabevorgang Aₙ nur beim ersten Mal ausgeführt wird.

FIG 7 zeigt die Organisation der Daten im Speicher 10 des Controllers 9. Jedes Eingang- bzw. Ausgangssignal hat einen bestimmten Wert, der im Speicherbereich value eines Datenwortes abgelegt ist. Weiterhin weist jedes Datenwort noch zwei Bits exist und change auf, die der Zeitoptimierung der Schritte E und A dienen. Im Bit exist wird in bekannter Weise abgespeichert, ob der mit dem Datenwort korrelierende Eingang bzw. Ausgang bei der jeweiligen Konfiguration des Automatisierungsgeräts überhaupt existiert bzw. angeschlossen ist. Im Bit change wird gespeichert, ob sich der Wert des Datenwortes seit der letzten Ein- bzw. Ausgabe geändert hat. Bevor der Controller 9 die Ausgangssignale ausgibt bzw. die Eingangssignale einliest, prüft er anhand der Bits exist change, ob das betreffende Signal überhaupt existieren kann und ob es sich gegebenenfalls seit der letzten Ausgabe bzw. seit dem letzten Einlesen geändert hat. Nur die Änderungen werden vom Controller 9 an die Baugruppen 3 ausgegeben bzw. von den Baugruppen 3 eingelesen. Dadurch kann die Zeit zum Ausführen der Schritte E und A erheblich reduziert werden.

Um die Leitungen des Busses 2 zu überprüfen, werden nach jeweils einer vorwahlbaren Anzahl von Zyklen nicht nur die Änderungen, sondern alle existierenden Signale übertragen. Die Anzahl von Zyklen liegt typisch im Bereich von 10 bis 1000, vorzugsweise um die 100. Wenn die vorgewählte Anzahl von Zyklen seit dem letzten vollen Datentransfer erreicht ist, meldet dies der Zähler 12 an das Bauteil 11, das daraufhin beim nächsten Datentransfer A, E alle existierenden Ein-/Ausgänge abfragt und nicht nur die, deren Wert sich geändert hat. Anschließend wird der Zähler 12 wieder zurückgesetzt.

Bei den Ausgangssignalen ist die Überwachung der Signale auf Änderung besonders einfach, da alle nötigen Informationen innerhalb der Zentraleinheit 1 vorliegen und beim Kopieren des Prozeßabbilds PAA′ in den Zwischenspeicher 10 automatisch dem Controller 9 mitgeteilt werden. Wenn der Änderungstransfer nur für die Ausgangssignale durchgeführt wird, während die Eingangssignale stets vollständig eingelesen werden, muß selbstverständlich nur der Zwischenspeicher die Bits change für die Ausgabewerte aufweisen, nicht dagegen der Zwischenspeicher.

Zur Realisierung eines Einlesens nur der Eingangssignale, deren Wert sich gegenüber dem vorhergehenden Einlesevorgang geändert hat, gibt es mehrere Möglichkeiten. Eine Möglichkeit ist, die Eingangssignale zunächst in die Eingabeeinheiten 3 einzulesen, dort mit den zuletzt an die Zentraleinheit 1 übertragenen Daten zu vergleichen und dann der Zentraleinheit 1, z.B. durch einen Interrupt, zu melden, daß sich ein Eingangssignal geändert hat. Durch diese Meldung wird dann der I/O-Controller 9 in die Lage versetzt, selektiv nur die geänderten Eingangssignale einzulesen. Eine weitere Möglichkeit besteht darin, daß die Eingabeeinheiten 3 selbst auf den Bus 2 zugreifen können, so daß nicht der Controller 9 die Daten von den Eingabeeinheiten 3 abruft, sondern die Eingabeeinheiten 3 selbst aktiv die geänderten Daten an den Controller 9 übersenden.

Um das Vergleichen der jetzt gelesenen Daten mit den zuvor gelesenen Daten durchführen zu können, müssen die Einheiten 3 über eine minimale Speicherkapazität zum Zwischenspeichern der zuletzt eingelesenen Eingangssignale sowie eine gewisse Intelligenz zum Vergleichen der neu eingelesenen Eingangssignale mit den zuletzt eingelesenen Eingangssignale verfügen sowie ferner in der Lage sein, aktiv auf den Bus 2 zuzugreifen, zumindest durch Aussenden eines Interrupt-Signals.

Die Zahl der zu übertragenden Eingangssignale läßt sich noch weiter reduzieren, wenn die Eingangssignale nur bei Anliegen eines von der Zentraleinheit 1 ausgesandten Einlesebefehls in die Eingabeeinheiten 3 eingelesen werden. Dadurch wird nämlich erreicht, daß nicht zwischenzeitliche Schwankungen, sondern nur die Signalwerte beim letzten und beim jetzigen Einlesen in die Eingabeeinheiten 3 darüber entscheiden, ob das jeweilige Eingangssignal übertragen werden muß. Der Einlesebefehl wird mit Vorteil unmittelbar nach Beenden eines Ausgabevorgangs A ausgesandt.

FIG 8 zeigt eine derartige Baugruppe 3. Die Baugruppe 3 weist einen anwendungsspezifischen Schaltkreis 13 auf, der z.B. aufgrund eines über die Steuerleitung RD übertragenen Befehls "read-data" die Latches 14 durchschaltet und so die an den Leitungen 4 anliegenden Eingangssignale einliest. Der ASIC 13 vergleicht dann die neu eingelesenen Daten mit den im Speicher 15 abgespeicherten Daten, die beim vorhergehenden Einlesevorgang eingelesen wurden, und vermerkt, welche Eingangssignale sich geändert haben. Dies geschieht vorzugsweise auf die gleiche Art, auf die der Controller 9 feststellt, ob sich Ausgangssignale geändert haben. Wenn sich Änderungen ergeben haben, kann der ASIC 13 über die Steuerleitung RR eine Anforderung "read-request" an die Zentraleinheit 1 übersenden, was bedeutet, daß Eingangssignale aus der Baugruppe 3 in die Zentraleinheit einzulesen sind. In diesem Falle werden die Daten vom Controller 9 aus der Baugruppe 3 ausgelesen. Bis auf das Aussenden der Ausleseanforderung ist die Baugruppe 3 also eine rein passive Komponente, sowie ein Speicherbaustein. Ebenso ist es auch möglich, daß der Baustein 13 über die Leitung BR durch den Befehl "bus request" die Zuweisung des Busses 2 anfordert, so daß die Baugruppe 3 aktiv ihre Daten über den Adreßbus 16 und den Datenbus 17 an den Controller 9 übertragen kann.

Die gleiche Vorgehensweise, nämlich die Übergabe von Werten nur bei Änderung, ist prinzipiell auch für die Schritte E′ und A′ möglich. Sie ist jedoch im Regelfall nicht nötig, da die Schritte E′, A′ nur relativ wenig Zeit beanspruchen.

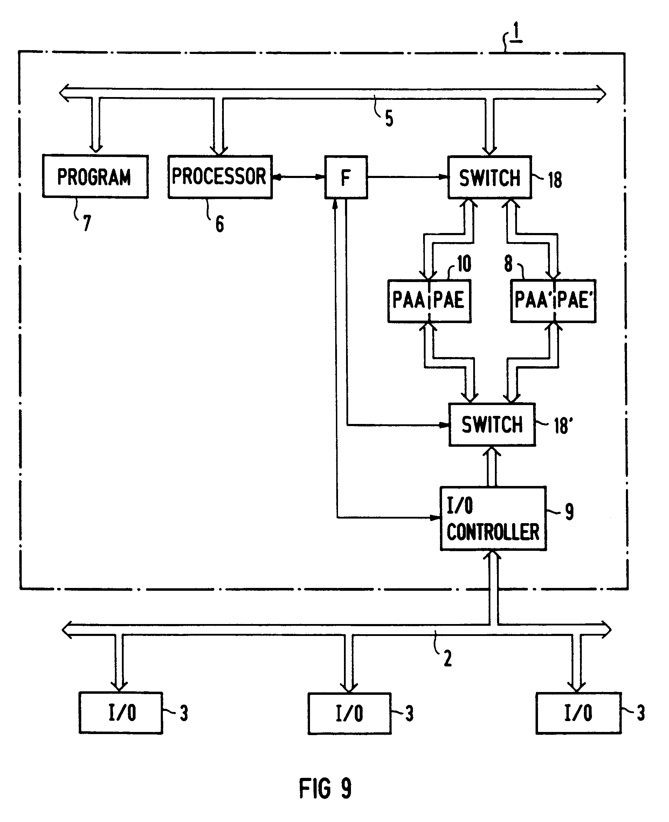

Abschließend sei noch auf eine mögliche Weiterentwicklung des in FIG 1 dargestellten Aufbaus der Zentraleinheit 1 hingewiesen, die in FIG 9 dargestellt ist. In diesem Fall ist der Zwischenspeicher 10 nicht Bestandteil des Controllers 9, sondern gleichrangig mit dem Arbeitsspeicher 8 auf der Zentraleinheit angeordnet. Der Zugriff auf die Speicher 8, 10 erfolgt von beiden Bussen 2, 5 aus jeweils über eine Weiche 18, 18′, so daß ein Kopieren von Prozeßabbildern vom Arbeitsspeicher 8 in den Zwischenspeicher 10 und umgekehrt entfallen kann. Über die Weiche 18 greift der Prozessor 6 zu einem gegebenen Zeitpunkt nur auf den Arbeitsspeicher 8 zu, unabhängig davon, was mit dem Zwischenspeicher 10 geschieht. Zum gleichen Zeitpunkt kann der Controller 9 über die Weiche 18′ nur auf den Zwischenspeicher 10 zugreifen. Wenn der Prozessor 6 und der Controller 9 ihre Programme abgearbeitet haben und ein neuer Kopiervorgang A′, E′ erfolgen müßte, wird nur das Flag F gesetzt bzw. rückgesetzt, worauf die Weichen 18, 18′ umschalten. Vom Moment des Umschaltens an kann der Prozessor 6 über die Weiche 18 nur noch auf den ursprünglichen Zwischenspeicher 10, der jetzt als Arbeitsspeicher wirkt, zugreifen und umgekehrt der Controller 9 nur noch auf den ehemaligen Arbeitsspeicher 8, der jetzt als Zwischenspeicher wirkt. Dadurch werden die Zeiten, die bei der Konfiguration gemäß FIG 1 für die Schritte E′ und A′ benötigt wurden, praktisch auf Null, nämlich auf das Umschalten des Flags F und der Weichen 18, 18′ reduziert.

Zur Realisierung eines derartigen Systems müssen die Speicher 8, 10 gleich ausgebildet sein. Ferner sollten zumindest die Weichen 18, 18′ Tri-state-Bustreiber aufweisen, so daß ein Zugriff der Weiche 18 z.B. auf den Speicher 8 den Zugriff der Weiche 18′ auf den Speicher 10 nicht stört und umgekehrt. Ebenso ist es aber auch möglich, daß die Speicher 8 und 10 als Dual-port-RAMs ausgebildet sind.

Das Umschalten der Weichen 18, 18′ kann statt über das Flag F auch über den Prozessor 6 erfolgen, wenn dieser entsprechende Zustandsinformationen über den Controller 9 erhält.

## Patentansprüche

1. Verfahren zum Betreiben eines Automatisierungsgerats zur Fuhrung eines technischen Prozesses (P), insbesondere eines modular aufgebauten Automatisierungsgerats, mit an das Automatisierungsgerät angeschlossener Prozeßperipherie, mit folgenden, zyklisch abgearbeiteten Schritten:
a) von der Prozeßperipherie gelieferte Eingangssignale werden in das Automatisierungsgerät eingelesen;
b) die Eingangssignale werden verarbeitet, wobei u.a. aus den Eingangssignalen Ausgangssignale fur die Prozeßperipherie ermittelt werden und
c) die Ausgangssignale werden an die Prozeßperipherie ausgegeben,
wobei das Ausgeben (A) der Ausgangssignale eines Zyklus zeitverschieden vom Einlesen (E) der Eingangssignale jedes anderen Zyklus erfolgt, **dadurch gekennzeichnet**, daß das Verarbeiten (B) der Eingangssignale eines Zyklus zumindest teilweise während des Ausgebens (A) der Ausgangssignale des vorhergehenden Zyklus und/oder des Einlesens (E) der Eingangssignale des nachfolgenden Zyklus erfolgt.

2. Verfahren nach Anspruch 1, **dadurch gekennzeichnet**, daß vor dem Verarbeiten (B) der Eingangssignale eines Zyklus die Ausgangssignale des vorhergehenden Zyklus von einem Arbeitsspeicher (8) in einen Zwischenspeicher (10) und die Eingangssignale des Zyklus vom Zwischenspeicher (10) in den Arbeitsspeicher (8) kopiert werden, so daß durch das Verarbeiten (B) die Eingangssignale des nachfolgenden Zyklus und die Ausgangssignale des vorhergehenden Zyklus nicht verändert werden.

3. Verfahren nach Anspruch 1 oder 2, **dadurch gekennzeichnet**, daß das Einlesen (E) der Eingangssignale des nachfolgenden Zyklus erst nach dem Ausgeben (A) der Ausgangssignale des vorhergehenden Zyklus erfolgt.

4. Verfahren nach Anspruch 2 oder 3, **dadurch gekennzeichnet**,
- daß während des Verarbeitens (B) der Eingangssignale eines Zyklus zumindest die Eingangssignale des nächsten Zyklus immer wieder eingelesen werden,
- daß nach dem Beenden der Verarbeitung (B) der Eingangssignale eines Zyklus das Beenden des gerade ablaufenden Einlesevorgangs (E) bzw., falls gerade kein Einlesevorgang (E) abläuft, des nächsten Einlesevorgangs (E) abgewartet wird,
- daß nach dem Beenden des Einlesevorgangs (E) die Ausgangssignale des Zyklus in den Zwischenspeicher (10) und die Eingangssignale des nächsten Zyklus in den Arbeitsspeicher (8) kopiert werden und
- daß nach dem Kopieren (A′) der Ausgangssignale des Zyklus in den Zwischenspeicher (10) die Ausgangssignale an die Prozeßperipherie ausgegeben werden.

5. Verfahren nach Anspruch 2 oder 3, **gekennzeichnet**durch folgende, zyklisch abgearbeitete Schritte:
- nach dem Kopieren (A′) der Ausgangssignale eines Zyklus in den Zwischenspeicher (10) und dem Einlesen (E) der Eingangssignale des nächsten Zyklus in den Zwischenspeicher (10) werden die Ausgangssignale an die Prozeßperipherie ausgegeben sowie die Eingangssignale in den Arbeitsspeicher (8) kopiert,
- nach dem Kopieren (E′ ) der Eingangssignale werden diese verarbeitet,
- nach dem Verarbeiten (B) der Eingangssignale und dem Ausgeben (A) der Ausgangssignale des vorhergehenden Zyklus werden die Ausgangssignale in den Zwischenspeicher (10) kopiert und
- nach dem Ausgeben (A) der Ausgangssignale und dem Kopieren (E′) der Eingangssignale werden die Eingangssignale des nächsten Zyklus in den Zwischenspeicher (10) eingelesen.

6. Verfahren nach Anspruch 5, **dadurch gekennzeichnet**, daß jeder Verfahrensschritt (E,E′, B,A′,A) sofort bei Erreichen seiner Zulässigkeitsbedingungen begonnen wird.

7. Verfahren nach Anspruch 2, 3, 4, 5 oder 6, **dadurch gekennzeichnet**, daß das Ausgeben (A) der Ausgangssignale an die Prozeßperipherie zumindest teilweise während des Kopierens (E′) der Eingangssignale in den Arbeitsspeicher (8) erfolgt und/oder das Einlesen (E) der Eingangssignale von der Prozeßperipherie zumindest teilweise während des Kopierens (A′) der Ausgangssignale in den Zwischenspeicher (10) erfolgt.

8. Verfahren nach Anspruch 1, **dadurch gekennzeichnet**,
- daß während des Verarbeitens (B) der Eingangssignale eines Zyklus diese Eingangssignale aus einem Arbeitsspeicher (8) gelesen und die beim Verarbeiten (B) ermittelten Ausgangssignale im Arbeitsspeicher (8) abgelegt werden,
- daß die Ausgangssignale des vorhergehenden Zyklus beim Ausgeben (A) aus einem Zwischenspeicher (10) ausgelesen werden und die Eingangssignale des nachfolgenden Zyklus beim Einlesen (E) in den Zwischenspeicher (10) eingelesen werden und
- daß nach dem Beenden dieser drei Schritte (B,A,E) der Arbeitsspeicher (8) und der Zwischenspeicher (10) ihre Funktion tauschen, so daß nach dem Funktionstausch der bisherige Arbeitsspeicher (8) als Zwischenspeicher und der bisherige Zwischenspeicher (10) als Arbeitsspeicher wirken.

9. Verfahren, insbesondere nach einem oder mehreren der obigen Ansprüche, **dadurch gekennzeichnet**, daß beim Ausgeben (A) der Ausgangssignale nur die Signale ausgegeben werden, deren Wert sich gegenüber dem Wert bei der vorhergegehenden Ausgabe geändert hat.

10. Verfahren nach Anspruch 9, **dadurch gekennzeichnet**, daß zum Leitungstest nach jeweils einer vorwählbaren Anzahl von Zyklen alle Ausgangssignale ausgegeben werden.

11. Verfahren, insbesondere nach einem oder mehreren der obigen Ansprüche, **dadurch gekennzeichnet**, daß nur die Signale in den Zwischenspeicher (10) eingelesen werden, deren Wert sich gegenüber dem Wert beim vorhergehenden Einlesen geändert hat.

12. Verfahren nach Anspruch 11, **dadurch gekennzeichnet**, daß die Eingangssignale zunächst in mindestens eine Eingabeeinheit (3) eingelesen werden, in der Eingabeeinheit (3) mit den zuletzt in den Zwischenspeicher (10) eingelesenen Eingangssignalen verglichen werden und jede Änderung der Eingangssignale einer Zentraleinheit (1), z.B. durch einen Interrupt, gemeldet wird, so daß die Zentraleinheit (1) selektiv die geänderten Eingangssignale einlesen kann.

13. Verfahren nach Anspruch 11, **dadurch gekennzeichnet**, daß die Eingangssignale zunächst in mindestens eine Eingabeeinheit (3) eingelesen werden, in der Eingabeeinheit (3) mit den zuletzt in den Zwischenspeicher (10) eingelesenen Eingangssignalen verglichen werden und bei einer Änderung eines Eingangssignals dieses Eingangssignal von der Eingabeeinheit (3) im Zwischenspeicher (10) abgelegt wird.

14. Verfahren nach Anspruch 11, 12 oder 13, **dadurch gekennzeichnet**, daß die Eingangssignale nur bei Anliegen eines von der Zentraleinheit (1) ausgesandten Einlesebefehls in die Eingabeeinheit (3) eingelesen werden.

15. Verfahren nach Anspruch 11, 12, 13 oder 14, **dadurch gekennzeichnet**, daß zum Leitungstest nach jeweils einer vorwählbaren Anzahl von Zyklen alle Eingangssignale eingelesen werden.

16. Automatisierungsgerät zur Führung eines technischen Prozesses (P), bestehend aus
- zumindest einer Eingabe- (3) und einer Ausgabeeinheit (3), vorzugsweise einer kombinierten Ein-/Ausgabeeinheit (3), zum zyklischen Einlesen (E) von Eingangssignalen von einer Prozeßperipherie und zum zyklischen Ausgeben (A) von Ausgangssignalen an die Prozeßperipherie,
- einem mit den Eingabe- (3) und Ausgabeeinheiten (3) verbundenen Ein-/Ausgabe-Controller (9) zum zyklischen Einlesen (E) der Eingangssignale und zum zyklischen Ausgeben (A) der Ausgangssignale,
- einem zumindest mit dem Ein-/Ausgabe-Controller (9) verbundenen Zwischenspeicher (10), in dem die gesamten von der Prozeßperipherie eingelesenen Eingangssignale zwischenspeicherbar und die gesamten an die Prozeßperipherie auszugebenden Ausgangssignale abspeicherbar sind,
- einem zumindest mit dem Ein-/Ausgabe-Controller (9) verbundenen Prozessor (6) zum Verarbeiten (B) der von der Prozeßperipherie gelieferten Eingangssignale und
- einem zumindest mit dem Prozessor (6) verbundenen Arbeitsspeicher (8) zum Speichern der gesamten von der Prozeßperipherie eingelesenen Eingangssignale und zum Zwischenspeichern der gesamten an die Prozeßperipherie auszugebenden Ausgangssignale.

17. Automatisierungsgerät nach Anspruch 16, **dadurch gekennzeichnet**, daß der Zwischenspeicher (10) einen Speicherbereich zum Abspeichern von Änderungsanzeigen (change) aufweist.

18. Automatisierungsgerät nach Anspruch 17, **dadurch gekennzeichnet**, daß es einen Zähler (12) zum Zählen der Zyklen aufweist.

19. Automatisierungsgerät nach Anspruch 16, 17 oder 18, **dadurch gekennzeichnet**, daß die Eingabeeinheiten (3) über Steuerleitungen (IR) zum Anfordern von Einlesevorgängen mit dem Ein-/Ausgabe-Controller (9) verbunden sind.

20. Automatisierungsgerät nach Anspruch 16, 17, 18 oder 19, **dadurch gekennzeichnet**, daß die Eingabeeinheiten (3) als selbständig auf den Zwischenspeicher (10) zugreifende Eingabeeinheiten (3) ausgebildet sind.

21. Automatisierungsgerät nach Anspruch 16, 17, 18, 19 oder 20, **dadurch gekennzeichnet**, daß der Arbeitsspeicher (8) und der Zwischenspeicher (10) gleich ausgebildet sind und daß sowohl der Prozessor (6) als auch der Controller (9) sowohl auf den Arbeitsspeicher (8) als auch auf den Zwischenspeicher (10) zugreifen können.

## Claims

1. Method for operating a programmable controller for controlling a technical process (P), in particular a programmable controller assembled in a modular manner, with a process interface system connected to the programmable controller, having the following, cyclically executed steps:
a) input signals supplied by the process interface system are read into the programmable controller;
b) the input signals are processed, whereby, among other things, output signals for the process interface system are determined from the input signals, and
c) the output signals are emitted to the process interface system,
whereby the emission (A) of the output signals of a cycle takes place at a different time to the reading-in (E) of the input signals of each other cycle, characterized in that the processing (B) of the input signals of a cycle takes place at least partially during the emission (A) of the output signals of the preceding cycle and/or the reading-in (E) of the input signals of the following cycle.

2. Method according to claim 1, characterized in that before the processing (B) of the input signals of a cycle the output signals of the preceding cycle are copied from a working memory (8) into an intermediate memory (10) and the input signals of the cycle are copied from the intermediate memory (10) into the working memory (8) so that through the processing (B) the input signals of the following cycle and the output signals of the preceding cycle are not changed.

3. Method according to claim 1 or 2, characterized in that the reading-in (E) of the input signals of the following cycle only takes place after the emission (A) of the output signals of the preceding cycle.

4. Method according to claim 2 or 3, characterized in that
- during the processing (B) of the input signals of a cycle at least the input signals of the next cycle are read in again and again,
- after the end of the processing (B) of the input signals of a cycle the end of the reading-in procedure (E) which is just taking place or, if no reading-in procedure (E) is just taking place, the end of the next reading-in procedure (E) is awaited,
- after the end of the reading-in procedure (E) the output signals of the cycle are copied into the intermediate memory (10) and the input signals of the next cycle are copied into the working memory (8), and
- after the copying (A′) of the output signals of the cycle into the intermediate memory (10) the output signals are emitted to the process interface system.

5. Method according to claim 2 or 3, characterized by the following, cyclically executed steps:
- after the copying (A′) of the output signals of a cycle into the intermediate memory (10) and the reading-in (E) of the input signals of the next cycle into the intermediate memory (10) the output signals are emitted to the process interface system and the input signals are copied into the working memory (8),
- after the copying (E′) of the input signals the latter are processed,
- after the processing (B) of the input signals and the emission (A) of the output signals of the preceding cycle the output signals are copied into the intermediate memory (10), and
- after the emission (A) of the output signals and the copying (E′) of the input signals the input signals of the next cycle are read into the intermediate memory (10).

6. Method according to claim 5, characterized in that each procedural step (E,E′,B,A′,A) is begun immediately upon reaching its admissibility conditions.

7. Method according to claim 2, 3, 4, 5 or 6, characterized in that the emission (A) of the output signals to the process interface system takes place at least partially during the copying (E′) of the input signals into the working memory (8) and/or the reading-in (E) of the input signals from the process interface system takes place at least partially during the copying (A′) of the output signals into the intermediate memory (10).

8. Method according to claim 1, characterized in that
- during the processing (B) of the input signals of a cycle these input signals are read from a working memory (8) and the output signals determined during the processing (B) are deposited in the working memory (8),
- the output signals of the preceding cycle during emission (A) are read out from an intermediate memory (10) and the input signals of the subsequent cycle during reading-in (E) are read into the intermediate memory (10), and
- after the end of these three steps (B,A,E) the working memory (8) and the intermediate memory (10) exchange their functions so that after the function exchange the hitherto-existing working memory (8) operates as intermediate memory and the hitherto-existing intermediate memory (10) operates as working memory.

9. Method, in particular according to one or more of the above claims, characterized in that during the emission (A) of the output signals only those signals are emitted the value of which has changed compared with the value in the preceding emission.

10. Method according to claim 9, characterized in that for the line test, all output signals are emitted according to a respective preselectable number of cycles.

11. Method, in particular according to one or more of the above claims, characterized in that only those signals are read into the intermediate memory (10) the value of which has changed compared with the value in the preceding reading-in.

12. Method according to claim 11, characterized in that the input signals are first of all read into at least one input unit (3), are compared in the input unit (3) with the input signals read into the intermediate memory (10) last and each change of the input signals is signalled to a central unit (1), for example by way of an interrupt, so that the central unit (1) can selectively read in the changed input signals.

13. Method according to claim 11, characterized in that the input signals are first of all read into at least one input unit (3), are compared in the input unit (3) with the input signals read into the intermediate memory (10) last and upon a change of an input signal this input signal is deposited by the input unit (3) in the intermediate memory (10).

14. Method according to claim 11, 12 or 13, characterized in that the input signals are only read into the input unit (3) with the presence of a reading-in command emitted by the central unit (1).

15. Method according to claim 11, 12, 13 or 14, characterized in that for the line test, all input signals are read in according to a respective preselectable number of cycles.

16. Programmable controller for controlling a technical process (P), comprising
- at least one input unit (3) and one output unit (3), preferably a combined input/output unit (3), for the cyclical reading-in (E) of input signals from a process interface system and for the cyclical emission (A) of output signals to the process interface system,
- an input/output controller (9) connected to the input (3) and output units (3) for the cyclical reading-in (E) of the input signals and for the cyclical emission (A) of the output signals,
- an intermediate memory (10) connected at least to the input/output controller (9), in which memory all the input signals read in from the process interface system can be intermediately stored and all the output signals to be emitted to the process interface system can be stored,
- a processor (6) connected at least to the input/output controller (9) for processing (B) the input signals supplied from the process interface system, and
- a working memory (8) connected at least to the processor (6) for storing all the input signals read in from the process interface system and for the intermediate storing of all the output signals to be emitted to the process interface system.

17. Programmable controller according to claim 16, characterized in that the intermediate memory (10) has a memory area for storing change displays (change).

18. Programmable controller according to claim 17, characterized in that it has a counter (12) for counting the cycles.

19. Programmable controller according to claim 16, 17 or 18, characterized in that the input units (3) are connected by way of control lines (IR) for requesting reading-in procedures to the input/output controller (9).

20. Programmable controller according to claim 16, 17, 18 or 19, characterized in that the input units (3) are constructed as input units (3) independently accessing the intermediate memory (10).

21. Programmable controller according to claim 16, 17, 18, 19 or 20, characterized in that the working memory (8) and the intermediate memory (10) are constructed the same and in that both the processor (6) and the controller (9) can access both the working memory (8) and the intermediate memory (10).

## Revendications

1. Procédé pour faire fonctionner un appareil d'automatisation pour la conduite d'un processus technique (P), notamment d'un appareil d'automatisation de conception modulaire, comportant une périphérie du processus raccordée à l'appareil d'automatisation, mettant en oeuvre les étapes suivantes, exécutées cycliquement :
a) on introduit des signaux d'entrée délivrés par la périphérie du processus dans l'appareil d'automatisation;
b) on traite les signaux d'entrée, et on détermine entre autres des signaux de sortie pour la périphérie du processus à partir des signaux d'entrée; et
c) on envoie les signaux de sortie à la périphérie du processus,
la délivrance (A) des signaux de sortie d'un cycle s'effectue à des intervalles de temps différents de l'introduction (E) des signaux d'entrée de chaque autre cycle, caractérisé par le fait que le traitement (B) des signaux d'entrée d'un cycle s'effectue au moins en partie pendant la délivrance (A) des signaux de sortie du cycle précédent et/ou pendant l'introduction (E) des signaux d'entrée du cycle suivant.

2. Procédé suivant la revendication 1, caractérisé par le fait qu'avant le traitement (B) des signaux d'entrée d'un cycle, on copie les signaux de sortie du cycle précédent, d'une mémoire de travail (8) dans une mémoire intermédiaire (10) et on copie les signaux d'entrée du cycle, de la mémoire intermédiaire (10) dans la mémoire de travail (8), de sorte que l'on ne modifie pas par le traitement (B), les signaux d'entrée du cycle suivant et les signaux de sortie du cycle précédent.

3. Procédé suivant la revendication 1 ou 2, caractérisé par le fait que l'introduction (E) des signaux d'entrée du cycle suivant ne s'effectue qu'après la délivrance (A) des signaux de sortie du cycle précédent.

4. Procédé suivant la revendication 2 ou 3, caractérisé par le fait
- que pendant le traitement (B), des signaux d'entrée d'un cycle, on réintroduit toujours au moins les signaux d'entrée du cycle suivant,
- qu'après la fin du traitement (B) des signaux d'entrée d'un cycle, on attend la fin du processus d'introduction (E), qui se déroule précisément, ou, dans le cas où aucun processus d'entrée (E) n'est exécuté, la fin du processus d'introduction immédiatement suivant (E),
- qu'à la fin du processus d'introduction (E), on copie les signaux de sortie du cycle dans la mémoire intermédiaire (10) et les signaux d'entrée du cycle suivant dans la mémoire de travail (8), et
- après le copiage (A′) des signaux de sortie du cycle dans la mémoire intermédiaire (10), on envoie les signaux de sortie à la périphérie du processus.

5. Procédé suivant la revendication 2 ou 3, caractérisé par les étapes suivantes, qui sont exécutées cycliquement :
- après le copiage (A′) des signaux de sortie d'un cycle dans la mémoire intermédiaire (10) et l'introduction (E) des signaux d'entrée du cycle suivant dans la mémoire intermédiaire (10), on délivre les signaux de sortie à la périphérie du processus et on copie les signaux d'entrée dans la mémoire de travail (8),
- après le copiage (E′) des signaux d'entrée, on traite ces derniers,
- après le traitement (B) des signaux d'entrée et la délivrance (A) des signaux de sortie du cycle précédent, on copie les signaux de sortie dans la mémoire intermédiaire (10), et
- après la délivrance (A) des signaux de sortie et le copiage (E′) des signaux d'entrée, on introduit les signaux d'entrée du cycle suivant dans la mémoire intermédiaire (10).

6. Procédé suivant la revendication 5, caractérisé par le fait que chaque étape (E,E′,B,A′,A) du procédé démarre immédiatement lorsque ses conditions d'autorisation sont atteintes.

7. Procédé suivant la revendication 2, 3, 4, 5 ou 6, caractérisé par le fait que la délivrance (A) des signaux de sortie à la périphérie du processus s'effectue au moins partiellement pendant le copiage (E′) des signaux d'entrée dans la mémoire de travail (8) et/ou l'introduction (E) des signaux d'entrée à partir de la périphérie du processus s'effectue au moins en partie pendant le copiage (A′) des signaux de sortie dans la mémoire intermédiaire (10).

8. Procédé suivant la revendication 1, caractérisé par le fait
- que pendant le traitement (B) des signaux d'entrée d'un cycle, on lit les signaux d'entrée provenant d'une mémoire de travail (8) et on mémorise les signaux de sortie, déterminés lors du traitement (B), dans la mémoire de travail (8),
- qu'on lit les signaux de sortie du cycle précédent à partir d'une mémoire intermédiaire (10) lors de la délivrance (A) et qu'on introduit les signaux d'entrée du cycle suivant, lors de l'introduction (E), dans la mémoire intermédiaire (10), et
- qu'à la fin de ces trois étapes (B,A,E), la mémoire de travail (8) et la mémoire intermédiaire (10) permutent leurs fonctions de sorte qu'après l'échange des fonctions, la mémoire, qui était jusqu'alors la mémoire de travail (8), agit en tant que mémoire intermédiaire et la mémoire, qui était jusqu'alors la mémoire intermédiaire (10), agit en tant que mémoire de travail.

9. Procédé, notamment suivant une ou plusieurs des revendications précédentes, caractérisé par le fait que lors de la délivrance (A) des signaux de sortie, on ne délivre que les signaux, dont la valeur a changé par rapport à la valeur présente lors de la délivrance précédente.

10. Procédé suivant la revendication 9, caractérisé par le fait que pour tester la ligne, on délivre tous les signaux de sortie après un membre de cycles pouvant être présélectionné.

11. Procédé, notamment suivant une ou plusieurs des revendications précédentes, caractérisé par le fait que l'on n'introduit dans la mémoire intermédiaire (10) que les signaux, dont la valeur a changé par rapport à la valeur présente lors de l'introduction précédente.

12. Procédé suivant la revendication 11, caractérisé par le fait que l'on introduit les signaux d'entrée d'abord dans au moins une unité d'entrée (3), on les compare, dans l'unité d'entrée (3), aux signaux d'entrée introduits en dernier dans la mémoire intermédiaire (10) et on communique chaque modification des signaux d'entrée à une unité centrale (1), par exemple par une interruption, de sorte que l'unité centrale (1) peut introduire de façon sélective les signaux d'entrée modifiés.

13. Procédé suivant la revendication 11, caractérisé par le fait que l'on introduit les signaux d'entrée d'abord dans au moins une unité d'entrée (3), et on les compare, dans cette unité d'entrée (3), aux signaux d'entrée introduits en dernier lieu dans la mémoire intermédiaire (10), et, dans le cas d'une modification d'un signal d'entrée, on mémorise ce signal d'entrée par l'unité d'entrée (3) dans la mémoire intermédiaire (10).

14. Procédé suivant la revendication 11, 12 ou 13, caractérisé par le fait que l'on introduit les signaux d'entrée dans l'unité d'entrée (3) uniquement lors de l'application d'une instruction d'introduction émise par l'unité centrale (1).

15. Procédé suivant la revendication 11, 12, 13 ou 14, caractérisé par le fait que pour tester une ligne, on introduit tous les signaux d'entrée après respectivement un nombre pouvant être présélectionné de cycles.

16. Appareil d'automatisation pour la conduite d'un processus technique (P), constitué de
- au moins une unité d'entrée (3) et une unité de sortie (3), de préférence une unité d'entrée/sortie combinée (3), pour l'introduction cyclique (E) de signaux d'entrée à partir d'une périphérie du processus et pour la délivrance cyclique (A) de signaux de sortie à la périphérie du processus,
- un contrôleur d'entrée/sortie (9) relié aux unités d'entrée (3) et aux unités de sortie (3) pour l'introduction cyclique (E) des signaux d'entrée et la délivrance cyclique (A) des signaux de sortie, et
- une mémoire intermédiaire (10), reliée au moins au contrôleur d'entrée/sortie (9) et dans laquelle peuvent être mémorisés temporairement l'ensemble des signaux d'entrée introduits à partir de la périphérie du processus et dans laquelle peuvent être mémorisés tous les signaux de sortie devant être délivrés à la périphérie du processus,
- un processeur (6) relié au moins au contrôleur d'entrée/sortie (9) pour le traitement (B) des signaux d'entrée délivrés par la périphérie du processus et
- une mémoire de travail (8) reliée au moins au processeur (6) pour la mémorisation de l'ensemble des signaux d'entrée introduits à partir de la périphérie du processus et pour la mémorisation temporaire de tous les signaux de sortie devant être délivrés à la périphérie du processus.

17. Appareil d'automatisation suivant la revendication 16, caractérisé par le fait que la mémoire intermédiaire (10) possède une zone de mémoire pour la mémorisation d'indications de modifications (change).

18. Appareil d'automatisation suivant la revendication 17, caractérisé par le fait qu'il comporte un compteur (12) pour le comptage des cycles.

19. Appareil d'automatisation suivant la revendication 16, 17 ou 18, caractérisé par le fait que les unités d'entrée (3) sont reliées au contrôleur d'entrée/sortie (9), par l'intermédiaire de lignes de commande (IR) pour la demande de processus d'introduction.

20. Appareil d'automatisation suivant la revendication 16, 17, 18 ou 19, caractérisé par le fait que les unités d'entrée (3) sont réalisées sous la forme d'unités d'entrée (3), qui peuvent agir de façon indépendante sur la mémoire intermédiaire (10).

21. Appareil d'automatisation suivant la revendication 16, 17, 18, 19 ou 20, caractérisé par le fait que la mémoire de travail (8) et la mémoire intermédiaire (10) ont des structures identiques et qu'aussi bien le processeur (6) que le contrôleur (9) peuvent accéder aussi bien à la mémoire de travail (8) qu'à la mémoire intermédiaire (10).
